# EUROPÄISCHE PATENTSCHRIFT

(11) **EP 4 599 648 B1**
(45) Veröffentlichungstag und Bekanntmachung des Hinweises auf die Patenterteilung: **01.07.2026**
(21) Anmeldenummer: 23767926.1
(22) Anmeldetag: 14.09.2023
(51) Int. Cl.: H05B 3/14, H05B 3/42

(54) **KATALYTISCH AKTIVE HEIZELEMENTE, IHRE HERSTELLUNG UND VERWENDUNG**
CATALYTICALLY ACTIVE HEATING ELEMENTS, PRODUCTION AND USE THEREOF
ELEMENTS DE CHAUFFAGE A ACTIVITE CATALYTIQUE, LEUR FABRICATION ET LEUR UTILISATION

(30) Priorität: 07.10.2022 EP 22200202
(43) Veröffentlichungstag der Anmeldung: 13.08.2025
(73) Patentinhaber: Evonik Operations GmbH, 45128 Essen (DE)
(72) Erfinder: BINDERNAGEL, Ulf, 50933 Köln (DE); BECKER, Catrin Dorothee, 65929 Frankfurt (DE); MÜLLER, Thomas, 63674 Altenstadt (DE); KÖSTNER, Martin, 64295 Darmstadt (DE)
(74) Vertreter: Evonik Patent Association
(86) Internationale Anmeldenummer: PCT/EP2023/075246
(87) Internationale Veröffentlichungsnummer: WO 2024/074277

(56) Entgegenhaltungen:
- EP-B1- 1 945 345
- US-A1- 2017 106 360
- US-A1- 2017 314 441

## Beschreibung

Die Erfindung betrifft katalytisch aktive Heizelemente, ihre Herstellung und Verwendung in der Blausäureherstellung.

Blausäure (HCN), das einfachste Nitril, ist ein wichtiger Synthesebaustein in der organischen Chemie. Traditionell wird sie in der Metallgewinnung und -verarbeitung verwendet. Die Herstellung von Blausäure erfolgt im industriellen Maßstab meist nach dem Andrussow-Verfahren oder dem BMA-Verfahren.

Eine Einführung in die Technologie der Blausäureherstellung bieten:
Gail, E., Gos, S., Kulzer, R., Lorösch, J., Rubo, A., Sauer, M., Kellens, R., Reddy, J., Steier, N. and Hasenpusch, W. (2011). Cyano Compounds, Inorganic. In Ullmann's Encyclopedia of Industrial Chemistry, (Ed.). https://doi.org/10.1002/14356007.a08_159.pub3

Beim BMA-Verfahren (BMA := Blausäure aus Methan und Ammoniak) wird Blausäure aus Methan (CH₄) und Ammoniak (NH₃) in einer stark endothermen Reaktion hergestellt, die mit 1000°-1300°C vergleichsweise hohe Reaktionstemperaturen benötigt. Im Gegensatz zu dem Andrussow-Verfahren wird das BMA-Verfahren in Abwesenheit von Sauerstoff durchgeführt.

Durch die Verbrennung von Heizgas wird die im BMA-Verfahren benötigte Energie in einem separaten Brennraum bereitgestellt. Dabei kann aufgrund der notwendigen Mindesttemperaturen für die Blausäurereaktion nur ein Teil der eingesetzten Heizenergie für die Reaktion selbst genutzt werden. Der notwendige Einsatz fossiler Energieträger zur Bereitstellung der Reaktionsenthalpie in Verbindung mit der geringen energetischen Ausbeute für die Blausäure bedingen eine signifikante Erzeugung von CO₂.

Als eine alternative Energiequelle kann HCN mit elektrischer Energie statt mit fossilen Brennstoffen produziert werden. Bei Einsatz von Elektrizität aus regenerativ erzeugten Quellen ist das Verfahren potentiell weitestgehend CO₂ -neutral. Darüber hinaus weist ein strombeheiztes BMA-Verfahren weitere Vorteile gegenüber einem mit Fossil-Brennstoff beheiztem BMA-Verfahren auf, wie z. B.: im Bereich der Betriebskosten:
- Durch Vermeidung des zwangsweisen Energieverlustes auf der Brenngasseite aufgrund der hohen notwendigen Mindestreaktionstemperatur ist ein besserer energetischer Wirkungsgrad zu erwarten.
- Da keine Feuerfestmaterialien zur Ausmauerung des Reaktors eingesetzt werden müssen, werden schnellere An- und Abfahrzyklen erreicht.
- Eine homogenere Temperaturfahrweise erlaubt höhere Ausbeuten, wodurch sich die spezifischen Einsatzmengen an Methan und Ammoniak zur Blausäureherstellung verringern. Es ist nämlich bekannt, dass bei homogenen Temperaturverteilung deutlich höhere Ausbeuten bei gleichzeitig geringerer Nebenproduktbildung erzielt werden können.

Auch im Bereich der Investitionskosten sind Vorteile auf Seiten einer elektrisch beheizten BMA-Anlage gegenüber einer thermisch beheizten Anlage zu sehen:
- die Abwesenheit von Brenngas- und Rauchgasräumen erlaubt eine kompaktere Bauweise und höhere Raumzeitausbeuten,
- ebenso sind günstige modulare Verschaltungen möglich.

Schließlich ist ein elektrisches betriebenes BMA Verfahren nachhaltiger:
- Das anfallende, wasserstoff-haltige Restgas kann ggf. in nachgeschalteten Prozessen Erdgas als Heizgas substituieren und hier eine zusätzliche CO₂ Minderung erreichen.
- Der Wasserstoff im anfallenden Restgas hat einen erheblich niedrigen CO₂-Rucksack als Wasserstoff, der aus fossilen Kohlenwasserstoffen im Steam Reformer erzeugt wird und kann, nach eventuell notwendiger Aufreinigung, als Rohstoff für weitere chemische Reaktionen eingesetzt werden.

Aus all diesen Gründen besteht ein Interesse daran, ein mit elektrischer Energie betriebenes BMA Verfahren zu entwickeln, mit welchem im industriellen Maßstab Blausäure produziert werden kann.

Zur Herstellung von HCN in elektrisch beheizten Reaktoren sind verschiedene Konzepte bekannt:
Zum einen wird für die Blausäureherstellung die Anwendung von elektrisch beheizten Festbettreaktoren beschrieben, wobei die Aufheizung der Katalysatorschüttung durch Induktion erfolgen kann; vgl. WO 2017186437 A1.

Zum anderen werden strukturierte Katalysatorkörper, sogenannten Monolithe, aus elektrisch leitfähigem Material eingesetzt, wie dies in DE 10317197 A1, WO 2019228798 A1 oder WO 2021/063799 A1 beschrieben ist. In den genannten Veröffentlichungen werden die Edukte durch die mit Katalysator beschichteten Kanäle einer elektrisch beheizten Struktur geleitet.

In ähnlicher Weise beschreibt WO 2022017900 A1 mittels additiver Fertigung hergestellte, katalytisch aktive Heizelemente, die in verschiedenen endothermen Reaktionen eingesetzt werden sollen, so auch in der Blausäure. Die Heizelemente umfassen einen metallischen, elektrisch leitfähigen Kern, der mit einer keramischen Beschichtung versehen ist. Auf die keramische Beschichtung ist wiederum eine katalytisch aktive Schicht aufgebracht. Die katalytisch aktive Schicht enthält im Kontext des Andrussow-Verfahrens Pt, Co oder SnCo. Angaben zur Zusammensetzung der keramischen Schicht fehlen indes in Bezug auf die Blausäureherstellung. Im Kontext der Dampfreformierung werden keramische Schichten aus Al₂O₃, ZrO₂, MgAl₂O₄, CaAl₂O₄, genannt, auf welche katalytisch aktives Material aus Ni, Ru, Rh, Ir aufgetragen wird.

Prinzipieller Nachteil der additiv gefertigten Heizelemente ist, dass die Werkstoffwahl für die metallischen Kerne begrenzt ist.

Die Nutzung von katalytischen Heizstäben für die Herstellung von Blausäure über die BMA-Reaktion wird in NL 121661 und WO 9615983 A1 beschrieben: hier sind Graphit- bzw. Siliciumcarbid-Rohre als stromleitende Elemente verwendet, auf deren inneren Oberflächen Platin als Katalysator aufgetragen ist.

Ein Siliciumcarbid-Rohr mit direkt aufgetragenem Platin-Katalysator ist keine günstige Kombination für die BMA-Reaktion. Es ist nämlich bekannt, dass sich bei für das BMA Verfahren relevanten Temperaturbereichen ein Eutektikum zwischen Siliciumcarbid und Platin ausbildet:
L.L. Xu, J. Wang, H.S. Liu, Z.P. Jin: Thermodynamic assessment of the Pt-Si binary system. Calphad, Volume 32, Issue 1, 2008, Pages 101-105. https://doi.org/10.1016/j.calphad.2007.07.010

Dies hat zur Folge, dass das Platin mit dem Silicium eine Legierung eingeht und die katalytische Beschichtung bei den im BMA Verfahren erforderlichen hohen Reaktionstemperaturen die Haftung verliert. Die Katalyse wird verschlechtert.

Auch in US 20170106360 A1 werden katalytische Heizstäbe verwendet, wobei hier die Heizstäbe selbst aus katalytischem Material bestehen oder die Heizstäbe mit Katalysator beschichtet sind oder zuerst eine Trennschicht, ein sogenannter 'Washcoat', aufgetragen wird und dann der Katalysator als weitere Schicht aufgetragen werden. Im Fall von Stäben aus Siliciumcarbid (SiC) mit direkt aufgetragenem Platin (Pt) als Katalysator für BMA-Reaktion kann sich ebenfalls Eutektikum zwischen SiC und Pt ausbilden. Daher ist im Falle der Kombination von Platin-haltigen Katalysatoren und Heizstäben aus Siliziumcarbid für das BMA-Verfahren eine Trennschicht zwischen dem Heizstab und dem Katalysator zwingend notwendig. US 20170106360 A1 beschreibt auch eine solche Konstruktion mit Trennschicht (,Washcoat') aus dem Material Al₂O₃. Es ist jedoch bekannt, dass der thermische Ausdehnungskoeffizient von Al₂O₃ (~8*10⁻⁶K⁻¹ bei 600°C) deutlich größer ist als derjenige von Siliciumcarbid (~5*10⁻⁶K⁻¹ bei 600°C). Daher ist zu erwarten, dass die Trennschicht mit Al₂O₃ bei erhöhter Temperatur und /oder Temperaturwechseln von dem Siliciumcarbid abplatzt. Insgesamt überzeugen die bisher bekannten katalytisch aktiven Heizelemente nicht.

Es ist daher die Aufgabe der Erfindung, thermisch stabile und katalytisch aktive Heizelemente bereitzustellen, mit denen ein BMA-Verfahren gleichzeitig elektrisch beheizt und chemisch katalysiert werden können. Insbesondere sollen die Heizelemente im industriellen Dauerbetrieb thermisch und mechanisch stabil sein und ihre katalytische Aktivität beibehalten. Aus der US 2017/314441 A1 und der EP 1 945 345 B1 sind vergleichbare katalytische Heizstäbe bekannt.

Gelöst wird diese Aufgabe durch ein Heizelement, welches die folgenden Merkmale aufweist:
a) einen ersten elektrischen Anschluss;
b) einen zweiten elektrischen Anschluss;
c) einen massiven oder hohlen Kern enthaltend Siliciumcarbid, wobei der Kern den ersten Anschluss zumindest mit dem zweiten Anschluss elektrisch leitend verbindet;
d) eine auf den Kern aufgebrachte Schutzbeschichtung, welche Aluminiumnitrid enthält;
e) ein auf die Schutzbeschichtung aufgebrachtes Katalysatorsystem, wobei das Katalysatorsystem Platin enthält.

Ein solches Heizelement ist ein erster Gegenstand der Erfindung.

Das erfindungsgemäße Heizelement hat einen Schichtaufbau A, B, C aus (A) Siliciumcarbid, (B) Aluminiumnitrid und (C) platinhaltiger Katalysator. Das Siliciumcarbid dient als elektrischer Heizwiderstand. Zwischen Katalysatorschicht und Siliciumcarbid ist Aluminiumnitrid als Schutzschicht angeordnet. Sie verhindert, dass Platin und Siliciumcarbid im laufenden Betrieb legieren. Da Aluminiumnitrid einen ähnlichen thermischen Ausdehnungskoeffizienten wie Siliciumcarbid aufweist (-5 *10⁻⁶K⁻¹ bei 600°C), sind durch unterschiedliche Wärmeausdehnung bedingte Spannungen in dem Schichtaufbau vernachlässigbar. Aluminiumnitrid (AIN) verhält sich in der Blausäurereaktion chemisch neutral und beeinträchtigt daher die Reaktion nicht.

Vorzugsweise ist die Katalysatorbeschichtung ausschließlich auf die Schutzbeschichtung aufgetragen. Dadurch wird die Ausbildung eines Eutektikums zwischen SiC und Pt verhindert.

Die Schutzbeschichtung und die Katalysatorbeschichtung werden - verglichen mit dem Kern - optimalerweise sehr dünn ausgeführt. Konkret sollte das Volumen *v*₁ der Schutzbeschichtung und/oder das Volumen *v*₂ der Katalysatorbeschichtung kleiner sein als das Volumen *v*₀ des Kerns. Der Kern benötigt ein entsprechend größeres Volumen *v*₀, um trotz des hohen spezifischen elektrischen Widerstands einen großen Strom leiten zu können.

Das Heizelement kann hohl oder aus Vollmaterial und in unterschiedlichen Formen ausgeführt sein, gegebenenfalls als zylindrisches Rohr. Das Rohr kann gebogen sein. Das Heizelement weist elektrische Anschlüsse auf und kann sowohl mit Gleichstrom als auch mit Wechselstrom zweiphasig bzw. dreiphasig betrieben werden.

Die Herstellung der erfindungsgemäßen Heizelemente ist ein zweiter Gegenstand der Erfindung. Sie umfasst zumindest die folgenden Schritte:
a) Bereitstellen eines Kerns enthaltend Siliciumcarbid;
b) Bereitstellen eines Beschichtungsmittels enthaltend Aluminium und Stickstoff;
c) Bereitstellen eines Katalysatorsystems enthaltend Platin;
d) Beschichten des Kerns mit dem Beschichtungsmittel, sodass eine auf dem Kern haftende Schutzbeschichtung enthaltend Aluminiumnitrid erhalten wird;
e) Beschichten der Schutzbeschichtung mit dem Katalysatorsystem, so dass das Katalysatorsystem auf der Schutzbeschichtung haftet.

Erfindungsgemäß werden auf den Kern werden nacheinander die Schutzbeschichtung und sodann die Katalysatorbeschichtung aufgetragen.

Die Schutzbeschichtung enthält erfindungsgemäß Aluminiumnitrid. Das Beschichtungsmittel muss daher Aluminium und Stickstoff enthalten. Das Aluminium und der Stickstoff können elementar oder als Verbindung, auch mit sich selbst oder untereinander enthalten sein. Vorzugsweise enthält das Beschichtungsmittel Aluminiumnitrid dispergiert in einem Dispersionsmedium.

Das Auftragen der Schutzbeschichtung erfolgt dann rein physikalisch in einem Beschichtungsverfahren. Für die Beschichtung der Kerne sind unterschiedliche Methoden denkbar: Die einfachste Methode ist ein Tauchverfahren. Der Kern wird in das Beschichtungsmittel eingetaucht und wieder herausgezogen. Denkbar ist ebenfalls ein Spritzverfahren. Aufdrucken, Sputtern, Walzen oder Bürsten wären weitere Methoden, aber nur bedingt geeignet.

In allen Fällen wird anschließend getrocknet, sodass das Dispersionsmedium abdampft und das Aluminiumnitrid auf dem Siliciumcarbid haftet.

Alternativ kann auch ein Reaktivverfahren angewandt werden. Dafür wird als Beschichtungsmittel ein System verwendet, welches als erste Komponente Aluminium, vorzugsweise metallisch umfasst. Als zweite Komponente umfasst das System Stickstoff, vorzugsweise als Gas oder als stickstoffhaltiges Gas.

Zur Beschichtung wird zunächst das Aluminium auf den Kern aufgetragen und sodann dem Stickstoff ausgesetzt. Dies geschieht einfachstenfalls durch Aussetzen des mit Aluminium beschichteten Kerns einer Atmosphäre enthaltend gasförmigen Stickstoff oder stickstoffhaltiges Gas. Der Stickstoff reagiert in Gegenwart des Kerns mit dem Aluminium zu Aluminiumnitrid. Erforderlichenfalls wird die Atmosphäre aufgeheizt, um die Reaktion von Aluminium und Stickstoff zu Aluminiumnitrid zu ermöglichen. Das Aluminiumnitrid wird demnach in situ direkt auf dem Kern aus Siliciumcarbid gebildet.

Die Erhitzung der Atmosphäre kann durch Beaufschlagen des Siliciumcarbid-Kerns mit elektrischem Strom erfolgen. Die erste Komponente kann auch ein Dispersionsmedium umfassen, in dem das Aluminium dispergiert ist. Die Beschichtung mit dem Aluminium erfolgt entsprechend durch Auftragen der Dispersion. Das Dispersionsmedium kann mit der Stickstoff-Atmosphäre getrocknet und/oder durch elektrische Beheizung des Kerns verdampft werden. Alternativ kann metallisches Aluminium auf den Kern aufgesputtert oder aus der Gasphase abgeschieden werden.

Wichtig bei allen Beschichtungsverfahren ist, dass die elektrischen Anschlüsse nicht beschichtet werden, weil AIN ein elektrischer Nichtleiter ist. Dadurch würde der elektrische Anschluss nicht mehr möglich. Eine erste Möglichkeit dies auszuschließen, besteht darin, den Kern mit dem ersten und mit dem zweiten elektrischen Anschluss bereitzustellen und ihn sodann mit der Schutzbeschichtung und danach mit der Katalysatorbeschichtung zu versehen. Dabei muss darauf geachtet werden, dass die elektrischen Anschlüsse nicht beschichtet werden. Dazu können die Anschlüsse bei der Beschichtung beispielsweise maskiert werden.

Alternativ wird der Kern mit einem ersten und einem zweiten elektrischen Anschluss erst dann versehen, nachdem der Kern mit der Schutzbeschichtung beschichtet worden ist. In dem Fall kann der Kern etwa komplett beschichtet werden und die Beschichtung wird dann teilweise wieder von dem Kern entfernt, um die elektrischen Anschlüsse frei zu legen.

Ein dritter Gegenstand der Erfindung ist ein Heizelement, das durch das erfindungsgemäße Verfahren erhältlich ist. Dieser ist gekennzeichnet durch den beschriebenen Schichtaufbau und durch die durch das Beschichtungsverfahren erzeugte Schichtgüte und -Haftung.

Das erfindungsgemäße Heizelement kann zum Beheizen von endothermen chemischen Reaktionen eingesetzt werden, die sich mit Platin katalysieren lassen. Temperaturen bis etwa 1400°C sind möglich.

Vorzugsweise wird das Heizelement in der Herstellung von Blausäure oder anderen Nitrilen eingesetzt.

Die Verwendung des erfindungsgemäßen Heizelementes bei der Herstellung von Blausäure ist daher ebenfalls ein Gegenstand der Erfindung.

Insbesondere wird das Heizelement in einem elektrisch beheiztem BMA Verfahren verwendet, bei dem Blausäure in Abwesenheit von Sauerstoff aus Ammoniak und Methan synthetisiert wird.

Ein weiterer Gegenstand ist daher ein Verfahren zur Herstellung von Blausäure unter Verwendung des erfindungsgemäßen Heizelements. Ein solches Verfahren umfasst zumindest die folgenden Schritte:
a) Bereitstellen eines Reaktors enthaltend mindestens ein erfindungsgemäßes Heizelement;
b) Beaufschlagen des Reaktors mit einem Eduktgasgemisch enthaltend zumindest Ammoniak und Methan, wobei das Eduktgasgemisch einen Sauerstoffgehalt von kleiner 2 Vol-% aufweist oder wobei das Eduktgasgemisch frei von Sauerstoff ist;
c) Beaufschlagen des Heizelements mit elektrischem Strom;
d) Abziehen eines Produktgasgemisches enthaltend zumindest Blausäure aus dem Reaktor.

Aufgrund des geringen Sauerstoffanteils oder der bevorzugten Abwesenheit von Sauerstoff handelt es sich bei dem Verfahren nicht um einen Andrussow-Prozess, sondern um ein elektrisch beheiztes BMA-Verfahren, genannt E-BMA-Verfahren.

Das Produktgasgemisch kann neben Blausäure auch Nebenprodukte oder nicht umgesetzte Edukte enthalten.

Vorzugsweise wird das Verfahren ausschließlich elektrisch beheizt, das heißt, es wird keine thermische Energie zur Ermöglichung der endothermen Reaktion bereitgestellt. Dies schließt nicht aus, dass die Edukte mit nicht elektrischen Wärmequellen außerhalb des Reaktors vorgeheizt werden.

Vorzugsweise wird die Reaktion ausschließlich mit dem elektrischen Heizelement katalysiert. Dies bedeutet, dass abgesehen von dem auf dem erfindungsgemäßen Heizelement aufgetragenen Katalysatorsystem keine weiteren Katalysatoren in dem Reaktor bereitgestellt werden.

Es können auch mehrere erfindungsgemäße Heizelemente im Reaktor bereitgestellt werden.

### Figurenbeschreibung:

Die Erfindung soll nun anhand von Zeichnungen näher erläutert werden. Diese zeigen:
Fig. 1: erfindungsgemäßes Heizelement, schematisch, geschnitten;
Fig. 2: erfindungsgemäße Verfahrensdurchführung, schematisch.

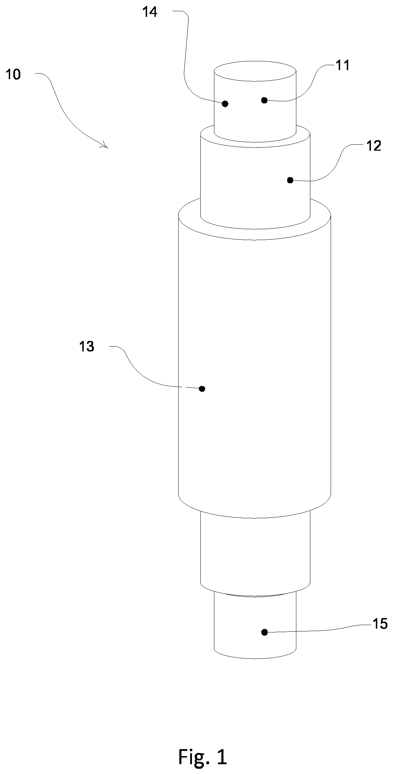

Das erfindungsgemäße Heizelement 10 ist in Figur 1 dargestellt. Er umfasst einen Kern 11 aus Siliciumcarbid (SiC). Darauf ist eine Schutzbeschichtung 12 aus überwiegend Aluminiumnitrid (AIN) aufgebracht. Auf die Schutzbeschichtung 12 ist ein Katalysatorsystem 13 enthaltend Platin (Pt) aufgebracht. Das Katalysatorsystem 13 ist vom Kern 11 durch die Schutzschicht 12 getrennt.

Schutzbeschichtung 12 und Katalysatorsystem 13 umschließen den Kern 11 komplett mit Ausnahme zweier Stellen, an denen das Heizelement 10 einen ersten elektrischen Anschluss 14 bzw. einen zweiten elektrischen Anschluss 15 aufweist. Die Schutzbeschichtung 12 haftet unlösbar auf dem Kern 11 und das Katalysatorsystem 13 haftet unlösbar auf der Schutzbeschichtung 12.

Alternativ zu der in Figur 1 dargestellten Ausführungsform kann der Kern 11 auch als ein hohles Rohr ausgeführt sein, welches an seiner Innenseite zunächst mit der Schutzbeschichtung 12 und drauf mit dem Katalysatorsystem 13 versehen ist (nicht dargestellt). Die katalytisch aktive Beschichtung liegt dementsprechend innen im Rohr.

Mit den beiden Anschlüssen 14, 15 wird das Heizelement 10 mit einer elektrischen Spannungsquelle 17 (in Figur 1 nicht dargestellt) kontaktiert. Das Heizelement kann auch einen dritten elektrischen Anschluss (nicht dargestellt) aufweisen, um dreiphasig betrieben werden zu können.

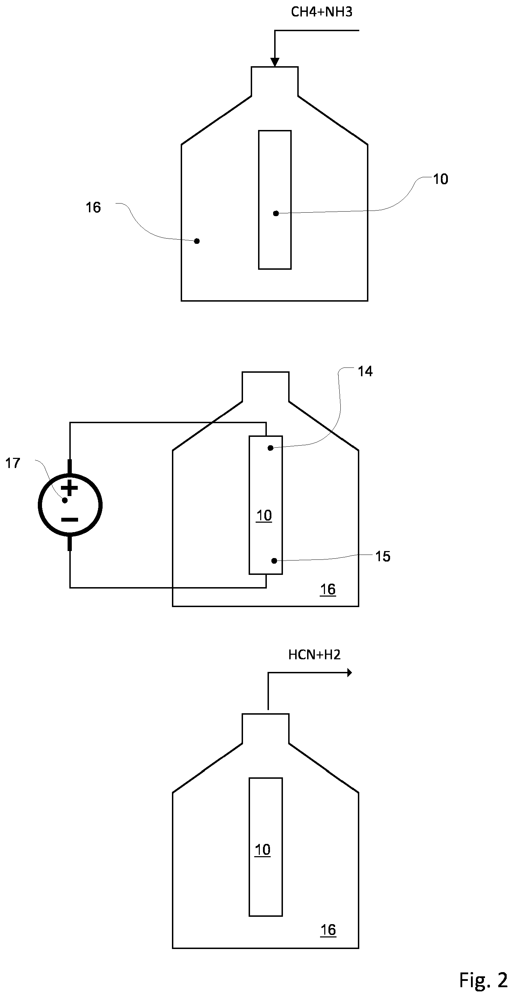

Figur 2 zeigt von oben nach unten den Verfahrensablauf schematisch in drei Schritten:
Ein Reaktor 16 mit darin angeordnetem Heizelement 10 wird bereitgestellt und mit Eduktgasgemisch (NH₃+CH₄) befüllt. Das Heizelement 10 wird an eine elektrische Spannungsquelle 17 angeschlossen und mit elektrischer Spannung beaufschlagt. Aufgrund des OHMschen Widerstands des Siliciumcarbids wird der Kern 11 heiß und heizt den Reaktor 16 von innen. Mittels im Katalysatorsystem 13 enthaltenen Platin wird das Eduktgasgemisch (NH₃+CH₄) in Produktgasgemisch (HCN + H₂) umgesetzt. Das primäre Produktgasgemisch (HCN + H₂) wird mit zusammen mit den Nebenprodukten und den nicht umgesetzten Edukten aus dem Reaktor 16 abgezogen.

### Beispiele:

Die Erfindung soll nun anhand von Beispielen näher erläutert werden.

### Motivation

Ziel des Versuchs ist die elektrische Beheizung eines Reaktors 16 zur Herstellung von HCN auf Temperaturen größer 1100°C mittels SiC-Heizelemente, wobei die Heizelemente 10 direkt in der Reaktionsgasphase angeordnet sind. Da die Reaktion somit direkt an der Oberfläche der Heizelemente 10 ablaufen wird, muss diese mit Katalysator beschichtet werden. Bei den benötigten Temperaturen kommt es zwischen der Hauptkomponente des BMA-Katalysators Platin und dem Elementmaterial (SiC) zur Bildung einer Legierung, wodurch die BMA-Reaktion erheblich gestört wird. Um die Bildung dieser Legierung zu vermeiden, wurde eine Schutzschicht auf die Heizelemente 10 aufgetragen, um so den Kontakt zwischen Pt und Si zu vermeiden. Als geeignete Sperrschicht wurde AIN (Aluminiumnitrid) identifiziert, da der Ausdehnungskoeffizient zwischen AIN und SiC in einem vergleichbaren Bereich liegen.

### Versuchsbeschreibung

Im Versuch wurde in einem Versuchsreaktor das System SiC/AIN untersucht. Ein SiC-Rohr in den Maßen ØA = 22 mm, ØI = 17 mm, L = 2100 mm, wurde mit AIN beschichtet. Dazu wurde AIN in eine Lackmatrix eingearbeitet, welche Bindemittel, Haftvermittler, Rheologieadditiv und Lösemittel enthält. Die Beschichtung der Innenseite des Rohrs erfolgt im angepassten Tauchverfahren. Dazu wird eine Seite des Rohres mit einem Stopfen verschlossen und über die zweite Öffnung Grundierungslack eingefüllt. Nach Verschließen der zweiten Öffnung, ebenfalls mit einem Stopfen, wird durch Drehen des Rohres die innere Oberfläche vollständig beschichtet. Überflüssiges Material wird anschließend ausgegossen und die Grundierung durch Durchströmen von Stickstoff getrocknet. Nach einer Trocknungszeit von 24h wurde das Rohr in den Versuchsreaktor eingebaut und die Grundierung im Stickstoffstrom aufgebrannt (Heizrate: 100 K/h, Zieltemperatur 1150°C, Haltezeit 2h). Nach vollständigem Abkühlen wurde, um eine ausreichende Schichtstärke zu erzielen, die Innenseite des Rohrs erneut mit Grundierung beschichtet und der Aufbrennvorgang wiederholt.
Auftragsmenge: 28,6g
Schichtstärke: ca. 30µm (rechnerisch)

Anschließend wurde das Rohr mit dem platinhaltigen Katalysator beschichtet und die Syntheseleistung im Versuchsreaktor 16 untersucht. Hauptziel bei Versuch war die Beurteilung des Syntheseverhaltens über die Laufzeit. Dazu wurde die Anlage bei einer Eduktgasbelastung von ca. 60 mol/h im Ammoniaküberschuss bei einer Temperatur von 1180°C über einen Zeitraum von ca. 170 h betrieben.

### Ergebnis

Die Ausbeuten lagen über einen längeren Zeitraum größer 80% bezogen auf Ammoniak und größer 90% bezogen auf Methan und damit auf einem vergleichbaren Niveau zu einem Standardrohr aus Korund. In dem untersuchten Zeitraum zeigt sich ein vergleichbares Syntheseverhalten zu einem Standardrohr.

### Beschichtungsverfahren

Das gewählte Beschichtungsverfahren für die Grundierung ist die einfachste Möglichkeit ein einzelnes Rohr ohne großen Aufwand zu beschichten. Eine Beschichtung im Spritzverfahren ist ebenfalls möglich und wurde erfolgreich praktiziert.

### Bezugszeichen

- 10: Heizelement
- 11: Kern
- 12: Schutzbeschichtung
- 13: Katalysatorsystem
- 14: erster elektrischer Anschluss
- 15: zweiter elektrischer Anschluss
- 16: Reaktor
- 17: Spannungsquelle

- AIN: Aluminiumnitrid
- CH4: Methan
- CH4+NH3: Eduktgemisch
- H2: Wasserstoff
- HCN: Blausäure
- HCN+H2: Produktgemisch
- NH3: Ammoniak
- Pt: Platin
- SiC: Siliciumcarbid

## Patentansprüche

1. Heizelement (10), mindestens umfassend:
a) einen ersten elektrischen Anschluss (14);
b) einen zweiten elektrischen Anschluss (15);
c) einen massiven oder hohlen Kern (11) enthaltend Siliciumcarbid, wobei der Kern (11) den ersten Anschluss (14) zumindest mit dem zweiten Anschluss (15) elektrisch leitend verbindet;
d) eine auf den Kern (11) aufgebrachte Schutzbeschichtung (12);
e) ein auf die Schutzbeschichtung (12) aufgebrachtes Katalysatorsystem (13), wobei das Katalysatorsystem (13) Platin enthält;
**dadurch gekennzeichnet; dass**
die Schutzbeschichtung (12) Aluminiumnitrid enthält.

2. Heizelement (10) nach Anspruch 1, **dadurch gekennzeichnet, dass** das Katalysatorsystem (13) ausschließlich auf die Schutzbeschichtung (12) aufgetragen ist.

3. Heizelement (10) nach Anspruch 1 oder 2, wobei das Volumen *v*₁ der Schutzbeschichtung (12) und/oder das Volumen *v*₂ des Katalysatorsystems (13) kleiner ist als das Volumen *v*₀ des Kerns (11).

4. Verfahren zur Herstellung eines Heizelements (10) mit mindestens den folgenden Schritten:
a) Bereitstellen eines Kerns (11) enthaltend Siliciumcarbid;
b) Bereitstellen eines Beschichtungsmittels enthaltend Aluminium und Stickstoff;
c) Bereitstellen eines Katalysatorsystems (13) enthaltend Platin;
d) Beschichten des Kerns (11) mit dem Beschichtungsmittel, sodass eine auf dem Kern (11) haftende Schutzbeschichtung (12) enthaltend Aluminiumnitrid erhalten wird;
e) Beschichten der Schutzbeschichtung (12) mit dem Katalysatorsystem (13), so dass das Katalysatorsystem (13) auf der Schutzbeschichtung (12) haftet.

5. Verfahren nach Anspruch 4, **dadurch gekennzeichnet, dass** es sich bei dem Beschichtungsmittel um eine Dispersion handelt, welche ein Dispersionsmedium und darin dispergiert Aluminiumnitrid enthält.

6. Verfahren nach Anspruch 5, **dadurch gekennzeichnet, dass** die Dispersion auf den Kern (11) aufgesprüht wird und anschließend getrocknet wird.

7. Verfahren nach Anspruch 5, **dadurch gekennzeichnet, dass** der Kern (11) in die Dispersion eingetaucht und anschließend getrocknet wird.

8. Verfahren nach Anspruch 4, **dadurch gekennzeichnet, dass** es sich bei dem Beschichtungsmittel um ein System handelt, welches zwei Komponenten umfasst, nämlich eine erste Komponente enthaltend Aluminium und eine zweite Komponente enthaltend Stickstoff, und dass Aluminium und Stickstoff in Gegenwart des Kerns (11) zu Aluminiumnitrid umgesetzt werden.

9. Verwendung eines Heizelementes (10) nach Anspruch 1 bis 3 oder hergestellt nach einem der Ansprüche 4 bis 8 bei der Herstellung von Nitrilen, insbesondere von Blausäure.

10. Verwendung nach Anspruch 9 dergestalt, dass das Heizelement (10) zur Bereitstellung von Wärmeenergie und zur Katalyse einer endothermen Reaktion verwendet wird.

11. Verfahren zur Herstellung von Blausäure mit den folgenden Schritten:
a) Bereitstellen eines Reaktors (16) enthaltend mindestens ein Heizelement (10);
b) Beaufschlagen des Reaktors (16) mit einem Eduktgasgemisch enthaltend zumindest Ammoniak und Methan, wobei das Eduktgasgemisch einen Sauerstoffgehalt von kleiner 2 Vol-% aufweist oder wobei das Eduktgasgemisch frei von Sauerstoff ist;
c) Beaufschlagen des Heizelements (10) mit elektrischem Strom;
d) Abziehen eines Produktgasgemisches enthaltend zumindest Blausäure aus dem Reaktor (16);
**dadurch gekennzeichnet, dass**
es sich bei dem bereitgestellten Heizelement (10) um ein Heizelement (10) nach einem der Ansprüche 1 bis 3 oder nach ein Heizelement (10), hergestellt nach einem der Ansprüche 4 bis 8 handelt.

## Claims

1. Heating element (10) at least comprising:
a) a first electrical connection (14);
b) a second electrical connection (15);
c) a solid or hollow core (11) containing silicon carbide, wherein the core (11) electrically connects the first connection (14) at least to the second connection (15);
d) a protective coating (12) applied to the core (11);
e) a catalyst system (13) applied to the protective coating (12), wherein the catalyst system (13) contains platinum;
**characterized in that**
the protective coating (12) contains aluminium nitride.

2. Heating element (10) according to Claim 1, **characterized in that** the catalyst system (13) is applied exclusively to the protective coating (12).

3. Heating element (10) according to Claim 1 or 2, wherein the volume v₁ of the protective coating (12) and/or the volume v₂ of the catalyst system (13) is smaller than the volume v₀ of the core (11).

4. Process for producing a heating element (10), comprising at least the steps of:
a) providing a core (11) containing silicon carbide;
b) providing a coating composition containing aluminium and nitrogen;
c) providing a catalyst system (13) containing platinum;
d) coating the core (11) with the coating composition to obtain a protective coating (12) containing aluminium nitride adhering to the core (11);
e) coating the protective coating (12) with the catalyst system (13) so that the catalyst system (13) adheres to the protective coating (12).

5. Process according to Claim 4, **characterized in that** the coating composition is a dispersion containing a dispersion medium and aluminium nitride dispersed therein.

6. Process according to Claim 5, **characterized in that** the dispersion is sprayed onto the core (11) and subsequently dried.

7. Process according to Claim 5, **characterized in that** the core (11) is immersed in the dispersion and subsequently dried.

8. Process according to Claim 4, **characterized in that** the coating composition is a system comprising two components, namely a first component containing aluminium and a second component containing nitrogen and **in that** the aluminium and the nitrogen are reacted to afford aluminium nitride in the presence of the core (11).

9. Use of a heating element (10) according to Claims 1 to 3 or produced according to one of Claims 4 to 8 in the production of nitriles, in particular of hydrocyanic acid.

10. Use according to Claim 9 such that the heating element (10) is used for providing heat energy and for catalysis of an endothermic reaction.

11. Process for producing hydrocyanic acid comprising the steps of:
a) providing a reactor (16) containing at least one heating element (10);
b) supplying the reactor (16) with a reactant gas mixture containing at least ammonia and methane, wherein the reactant gas mixture has an oxygen content of less than 2% by volume or wherein the reactant gas mixture is free from oxygen;
c) supplying the heating element (10) with electrical current;
d) withdrawing a product gas mixture containing at least hydrocyanic acid from the reactor (16);
**characterized in that**
the provided heating element (10) is a heating element (10) according to one of Claims 1 to 3 or according to a heating element (10) produced according to one of Claims 4 to 8.

## Revendications

1. Élément chauffant (10), comprenant au moins :
a) un premier raccord électrique (14) ;
b) une deuxième raccord électrique (15) ;
c) un noyau (11) plein ou creux contenant du carbure de silicium, le noyau (11) reliant de manière électriquement conductrice le premier raccord (14) au moins au deuxième raccord (15) ;
d) un revêtement protecteur (12) appliqué sur le noyau (11) ;
e) un système catalytique (13) appliqué sur le revêtement protecteur (12), le système catalytique (13) contenant du platine ;
**caractérisé en ce que**
le revêtement protecteur (12) contient du nitrure d'aluminium.

2. Élément chauffant (10) selon la revendication 1, **caractérisé en ce que** le système catalytique (13) est appliqué exclusivement sur le revêtement protecteur (12).

3. Élément chauffant (10) selon la revendication 1 ou 2, dans lequel le volume v₁ du revêtement protecteur (12) et/ou le volume v₂ du système catalytique (13) est/sont inférieur(s) au volume v₀ du noyau (11).

4. Procédé de fabrication d'un élément chauffant (10) présentant au moins les étapes suivantes :
a) mise à disposition d'un noyau (11) contenant du carbure de silicium ;
b) mise à disposition d'un agent de revêtement contenant de l'aluminium et de l'azote ;
c) mise à disposition d'un système catalytique (13) contenant du platine ;
d) revêtement du noyau (11) par l'agent de revêtement de telle sorte qu'un revêtement protecteur (12) contenant du nitrure d'aluminium adhérant au noyau (11) est obtenu ;
e) revêtement du revêtement protecteur (12) par le système catalytique (13) de telle sorte que le système catalytique (13) adhère au revêtement protecteur (12).

5. Procédé selon la revendication 4, **caractérisé en ce que** l'agent de revêtement est une dispersion qui contient un milieu de dispersion et du nitrure d'aluminium dispersé dans celui-ci.

6. Procédé selon la revendication 5, **caractérisé en ce que** la dispersion est pulvérisée sur le noyau (11) et ensuite séchée.

7. Procédé selon la revendication 5, **caractérisé en ce que** le noyau (11) est immergé dans la dispersion puis séché.

8. Procédé selon la revendication 4, **caractérisé en ce que** l'agent de revêtement est un système comprenant deux composants, à savoir un premier composant contenant de l'aluminium et un second composant contenant de l'azote et **en ce que** l'aluminium et l'azote sont transformés en nitrure d'aluminium en présence du noyau (11).

9. Utilisation d'un élément chauffant (10) selon les revendications 1 à 3 ou fabriqué selon l'une des revendications 4 à 8 pour la préparation de nitriles, en particulier d'acide cyanhydrique.

10. Utilisation selon la revendication 9, de telle sorte que l'élément chauffant (10) est utilisé pour la mise à disposition d'énergie thermique et pour la catalyse d'une réaction endothermique.

11. Procédé de préparation d'acide cyanhydrique présentant les étapes suivantes :
a) mise à disposition d'un réacteur (16) contenant au moins un élément chauffant (10) ;
b) chargement du réacteur (16) avec un mélange de gaz de départ contenant au moins de l'ammoniac et du méthane, le mélange de gaz de départ présentant une teneur en oxygène inférieure à 2% en volume ou le mélange de gaz de départ étant exempt d'oxygène ;
c) sollicitation de l'élément chauffant (10) par un courant électrique ;
d) retrait d'un mélange de gaz produits contenant au moins de l'acide cyanhydrique (16) du réacteur ;
**caractérisé en ce que**
l'élément chauffant (10) mis à disposition est un élément chauffant (10) selon l'une des revendications 1 à 3 ou un élément chauffant (10) fabriqué selon l'une des revendications 4 à 8.
